# EUROPÄISCHE PATENTSCHRIFT

(11) **EP 1 593 295 B1**
(45) Veröffentlichungstag und Bekanntmachung des Hinweises auf die Patenterteilung: **30.05.2007**
(21) Anmeldenummer: 05103470.0
(22) Anmeldetag: 27.04.2005
(51) Int. Cl.: A01C 7/08, A01C 7/10

(54) **Zuführsystem für landwirtschaftliches Produkt**
Delivery system for an agricultural product
Système de distribution pour un produit agricole

(30) Priorität: 05.05.2004 US 839745
(43) Veröffentlichungstag der Anmeldung: 09.11.2005
(73) Patentinhaber: DEERE & COMPANY, Moline, Illinois 61265-8098 (US)
(72) Erfinder: Meyer, Bradley John, ND 58501, Bismarck (US)
(74) Vertreter: Holst, Sönke

(56) Entgegenhaltungen:
- EP-A- 0 254 218
- DE-A1- 10 037 713
- US-B1- 6 609 468

## Beschreibung

Die Erfindung betrifft ein Zuführsystem für landwirtschaftliches Produkt, insbesondere für Saatgut, mit einem Rahmen, einem am Rahmen montierten Hauptbehälter, wobei der Hauptbehälter eine Luftzuführeinrichtung aufweist, in die das Produkt aus dem Hauptbehälter geleitet wird und wobei die Luftzuführeinrichtung wenigstens einen Lufteinlass und wenigstens einen Produktauslass aufweist, wenigstens einer Ausbringeinheit, wobei die Ausbringeinheit eine Dosiervorrichtung zum Ausbringen von Produkt auf ein Feld aufweist, einer mit dem Produktauslass strömungsverbundenen Dosiervorrichtung, einem mit der Luftzuführeinrichtung pneumatisch verbundenen Gebläse, welches in die Luftzuführeinrichtung geleitete Druckluft erzeugt, wobei in der Luftzuführeinrichtung befindliches Produkt durch den Luftstrom aufgenommen wird, wenn der Luftstrom durch die Luftzuführeinrichtung in den Produktauslass strömt, und einer im Hauptbehälter angeordnete Rühreinrichtung, welche aktivierbar ist, um Produkt in den Luftstrom zu befördern.

An landwirtschaftlichen Sämaschinen werden pneumatische Zuführsysteme eingesetzt, um aus einem Saatguthauptbehälter das Saatgut automatisch zu einer Vielzahl von einzelnen Pflanzeinheiten zu befördern. Jede der einzelnen Pflanzeinheiten weist einen zusätzlichen Hilfsbehälter, zur Aufnahme des Saatguts, eine Dosiervorrichtung, zur Dosierung des Saatguts aus dem Hilfsbehälter, und einen Furchenöffner auf, zum Formen einer Pflanzfurche, in welche das dosierte Saatgut abgelegt wird. Um Druckluft zu schaffen, mit der ein Luftstrom erzeugt wird, der das Saatgut zu den Pflanzeinheiten befördert, wird ein Gebläse eingesetzt. Derartige Systeme füllen die Hilfsbehälter bei Bedarf automatisch wieder auf.

Die im Handel erhältlichen Zuführsysteme benötigen normalerweise ein großes Gebläse um den Luftstrom zu bilden. Ein großes Gebläse ist erforderlich, weil hohe Druckverluste im pneumatischen System aufgrund von abrupten Richtungswechsel des Luftstroms im Saatguthauptbehälter auftreten.

Ein weiteres System wird in der US 6,609,468 B1 offenbart. Das dort offenbarte Zuführsystem weist einen Rahmen mit einem Hauptbehälter und eine Vielzahl von Ausbringeinheiten auf. Ein Gebläse leitet Druckluft in einen Verteiler, in dem die Druckluft in eine Vielzahl von Luftversorgungsschläuchen verteilt wird. Die Luftversorgungsschläuche sind mit Lufteinlässen verbunden, die auf dem Boden des Saatguthauptbehälters angeordnet sind. Gegenüber den Lufteinlässen sind entsprechende Produktauslässe angeordnet, in denen der Luftstrom mit den darin aufgenommenen Produkten, wie z. B. Saatgut, aufgenommen wird. Die Produktauslässe sind mit Zuführschläuchen verbunden, welche wiederum mit den an den Ausbringeinheiten positionierten Hilfsbehältern verbunden sind. Der Boden des Saatguthauptbehälters ist gewölbt ausgebildet und weist nach außen auseinander laufende Seitenwände auf. Der Lufteinlass ist relativ zum Boden nach unten gerichtet und der Produktauslass nach oben gerichtet angewinkelt.

Über den entsprechenden Lufteinlässen und Produktauslässen sind spitz zulaufende Blenden angeordnet, so dass sich unterhalb der Blenden Produktanhäufungen bilden. Zwischen nebeneinander liegenden Blenden sind Zwischenräume angeordnet, so dass Produkt aus dem Saatguthauptbehälter zu den Produktanhäufungen fließen kann.

Die Düsenanordnung weist eine Rühreinrichtung mit einer Querstange auf, die mit einer Vielzahl von sich radial erstreckenden Fingern versehen ist. Die Querstange wird über eine Getriebe/Motor-Anordnung abwechselnd vorwärts und rückwärts verdreht. Die sich radial erstreckenden Finger durchfahren die Zwischenräume zwischen den einzelnen Blenden.

Pflanzsysteme müssen eine Vielzahl verschiedener Saatgutarten und unterschiedlich behandeltes Saatgut verarbeiten können. Daher ist es schwierig, ein einziges System zu entwickeln, welches gut bei allen Bedingungen arbeitet, ohne eingestellt werden zu müssen.

Das oben beschriebene Zuführsystem weist eine Rühreinrichtung auf, welche zu drehen beginnt, wenn sich die Pflanzmaschine auf dem Boden befindet und auseinandergefaltet ist. Dies ist von Vorteil, da sichergestellt wird, dass das Saatgut stets zu den Ausbringeinheiten befördert wird, auch während der Start-Füllphase, wenn die Pflanzmaschine sich noch nicht bewegt. Wie dem auch sei, kann die Rühreinrichtung gelegentlich, insbesondere wenn leicht beförderbares Saatgut eingesetzt wird, das Saatgut in die Luftströmung befördern und eventuell eine Verstopfung der Produktzuführschläuche zwischen dem Hauptbehälter und den Ausbringeinheiten hervorrufen.

Die der Erfindung zugrunde liegende Aufgabe wird darin gesehen, ein Zuführsystem der eingangs genannten Art anzugeben, welches zuverlässiger ist und weniger Bedienungsaufwand erfordert. Insbesondere soll ein Zuführsystem geschaffen werden, mit dem bei minimalen Bedienungsaufwand und Verstellungen durch die Bedienperson eine Vielzahl von Variationen an Saatgut ausbringbar ist und Systemverstopfungen minimiert werden.

Die Aufgabe wird durch die Lehre des Patentanspruchs 1 gelöst. Weitere vorteilhafte Ausgestaltungen und Weiterbildungen der Erfindung gehen aus den Unteransprüchen hervor. erfindungsgemäß

Erfindungsgemäß wird ein Zuführsystem der eingangs genannten Art derart ausgebildet, dass ein Sensor und eine Steuerung vorgesehen sind, wobei der Sensor auf die Größe der im Produktauslass strömenden Produktflussrate anspricht und wobei die Steuerung mit dem Sensor und mit der Rühreinrichtung signalverbunden ist und die Rühreinrichtung aktiviert, wenn die Größe der Produktflussrate einen voreinstellbaren Wert unterschreitet. Anhand der Steuerung kann eine Rühreinrichtung an einem Hauptbehälter oder Getreidetank eines Zuführsystems wählbar betrieben werden. Entsprechend einer bevorzugten Ausführungsform wird ein Differenzdruckschalter benutzt, um den Betrieb der Rühreinrichtung zu steuern. Die Rühreinrichtung ist nur unter voreingestellten Bedingungen in Betrieb.

Der Differenzdruckschalter am Zuführsystem misst die Differenz zwischen dem Druck der Druckluft, die dem Tank zugeführt wird, und dem Druck der Druckluft innerhalb des Tanks, um, basierend auf einer zu hohen Luftstromrate innerhalb des Systems, elektronisch zu erfassen, wann das System nicht mehr ausreichend Produkt befördert. Wenn der Sensor signalisiert, dass das System nicht mehr ausreichend Produkt befördert, dann startet das System automatisch die Rühreinrichtung. Diese Situation kann während Einfüllvorgängen zu Beginn oder während dem Ausbringen von klebrigem Saatgut oder beim Zuführen mit hohen Luftstromraten eintreten. Wenn die Dosiervorrichtungen befüllt sind und die entsprechende Luftstromrate reduziert ist, dann ist der Differenzdruck geringer und der Sensor signalisiert dem System die Rühreinrichtung auszuschalten, um zu verhindern, dass die Produktzuführschläuche überfüllt werden und verstopfen.

Erfindungsgemäß wird ein Zuführsystem für ein landwirtschaftliches Produkt geschaffen, welches von einer landwirtschaftlichen Maschine auf ein Feld ausgebracht wird. Es weist einen Rahmen, einen Saatguthauptbehälter, wenigstens eine Ausbringeinheit, einen Produktversorgungsschlauch, ein Gebläse, eine Rühreinrichtung, einen Sensor und ein Steuersystem auf.

Der Hauptbehälter ist auf dem Rahmen montiert. Der Hauptbehälter weist eine Düsenanordnung oder eine andere lufteinspeisende Vorrichtung auf, mit dem das Produkt in den Hauptbehälter befördert wird. Die Düsenanordnung weist wenigstens einen Lufteinlass und einen Produktauslass auf. Die Ausbringeinheit ist an den Rahmen montiert. Die Ausbringeinheit ist mit einer Dosiervorrichtung zum Ausbringen des Produkts auf das Feld versehen. Der Produktversorgungsschlauch ist mit dem Produktauslass und mit der Dosiervorrichtung strömungsverbunden. Das Gebläse ist pneumatisch mit der Düsenanordnung verbunden. Das Gebläse generiert Druckluft, welche in die Düsenanordnung geleitet wird. Das in der Düsenanordnung befindliche Produkt wird von dem Druckluftstrom aufgenommen, wenn dieser durch die Düsenanordnung zum Produktauslass strömt.

Die Rühreinrichtung ist im Hauptbehälter angeordnet und wird in Betrieb genommen, um Produkt in den Luftstrom zu befördern. Der Sensor ist derart ausgebildet, dass er auf die durch den Produktauslass strömende Produktflussrate anspricht. Das Steuersystem ist mit dem Sensor und der Rühreinrichtung signalverbunden. Die Steuereinrichtung aktiviert die Rühreinrichtung, sobald die Produktflussrate ein voreinstellbares Maß unterschreitet und sie deaktiviert die Rühreinrichtung wenn die Produktflussrate ein voreinstellbares Maß überschreitet.

Die Rühreinrichtung kann durch einen elektrischen Rührantrieb oder durch einen von einer elektrischen Kupplung gesteuerten mechanischen Antrieb angetrieben werden, um ein Produkt im Hauptbehälter mechanisch zu befördern. Der Sensor ist druckbeaufschlagt, um zwischen dem Hauptbehälter und der stromaufwärts gelegenen Seite der Düsenanordnung, stromabwärts des Gebläses, einen Differenzdruck zu erfassen. Die Steuereinrichtung umfasst einen elektrischen Schalter, der auf den von dem Sensor erfassten Differenzdruck anspricht. Die Steuereinrichtung spricht dann auf die Schalterstellung an, um den Antrieb für die Rühreinrichtung zu starten oder zu stoppen.

Alternativ weist der Sensor einen druckbeaufschlagten Differenzdruckschalter auf, welcher zwischen dem Hauptbehälter und der stromaufwärts gelegenen Seite der Düsenanordnung, stromabwärts des Gebläses, einen Differenzdruck erfasst, und die Steuereinheit weist ein Relais auf, welches auf die Schalterstellung anspricht und den Antrieb für die Rühreinrichtung startet oder stoppt.

Der Differenzdruckschalter in Verbindung mit der Rühreinrichtung des Zuführsystems ermöglicht ein vielseitigeres und automatischeres System. Das System schaltet die Rühreinrichtung auch automatisch aus, wenn das Gebläse nicht läuft und ermöglicht so eine einfachere Reinigung des Hauptbehälters. Da Zuführsysteme für größere Pflanzmaschinen und neuartige Getreidesorten benutzt werden, ist ein vielseitiges System, welches keine Anpassungen durch eine Bedienperson erfordert, von Vorteil.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer landwirtschaftlichen Pflanzmaschine mit einem erfindungsgemäßen Zuführsystem,

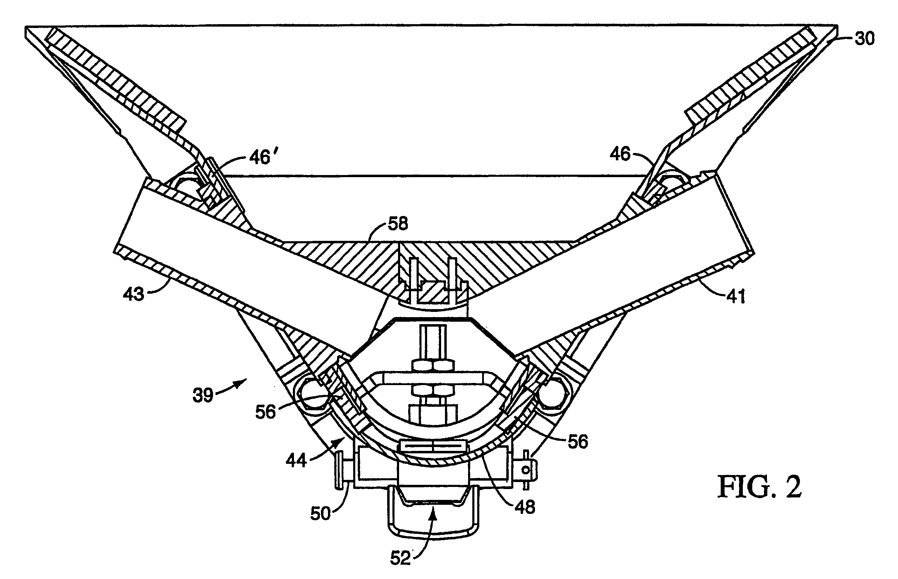

- Fig. 2: eine Seitenansicht eines Querschnitts der Düsenanordnung des Zuführsystems,

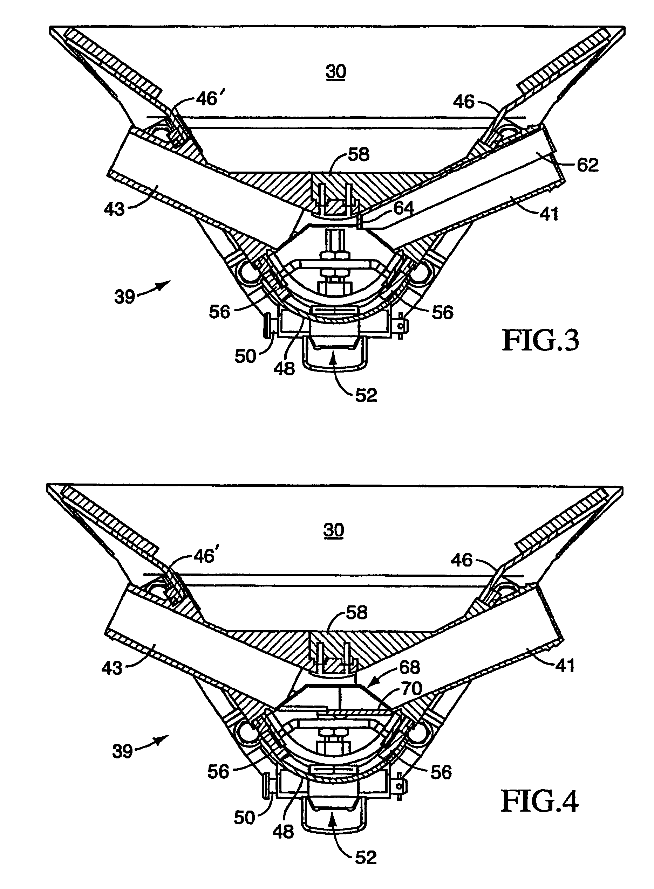

- Fig. 3: eine Seitenansicht eines Querschnitts der Düsenanordnung des Zuführsystems mit einem Luftablenkeinsatz,
- Fig. 4: eine Seitenansicht eines Querschnitts der Düsenanordnung des Zuführsystems mit einem Element zur Abgabebegrenzung,

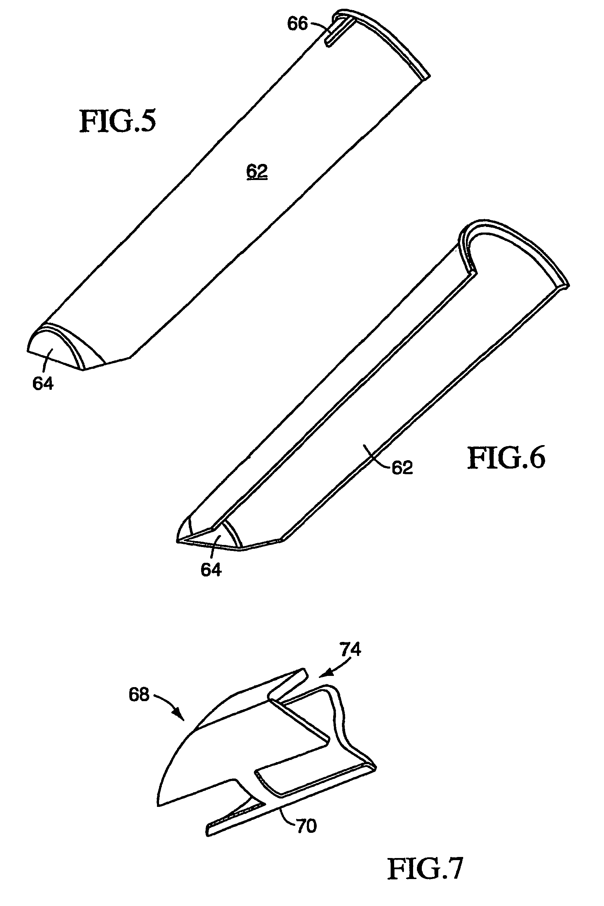

- Fig. 5: eine perspektivische Draufsicht des Luftablenkeinsatzes,
- Fig. 6: eine perspektivische Unteransicht des Luftablenkeinsatzes,
- Fig. 7: eine perspektivische Unteransicht des Elements zur Abgabebegrenzung,

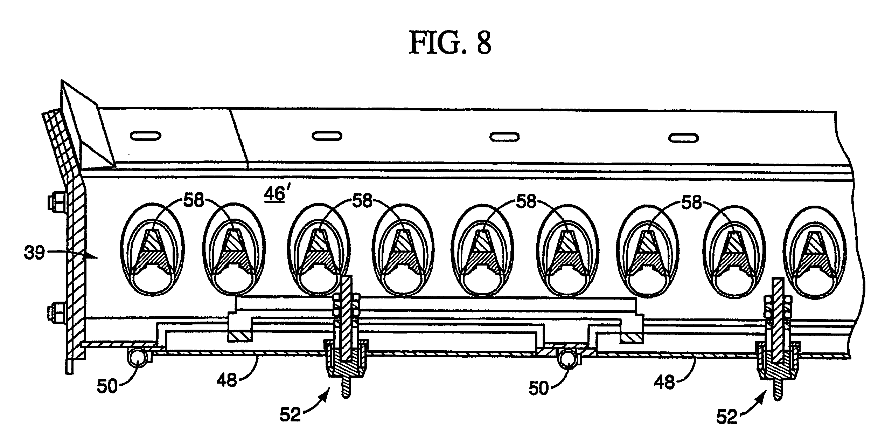

- Fig. 8: eine Querschnittsansicht der Düsenanordnung des Zuführsystems von vorn,

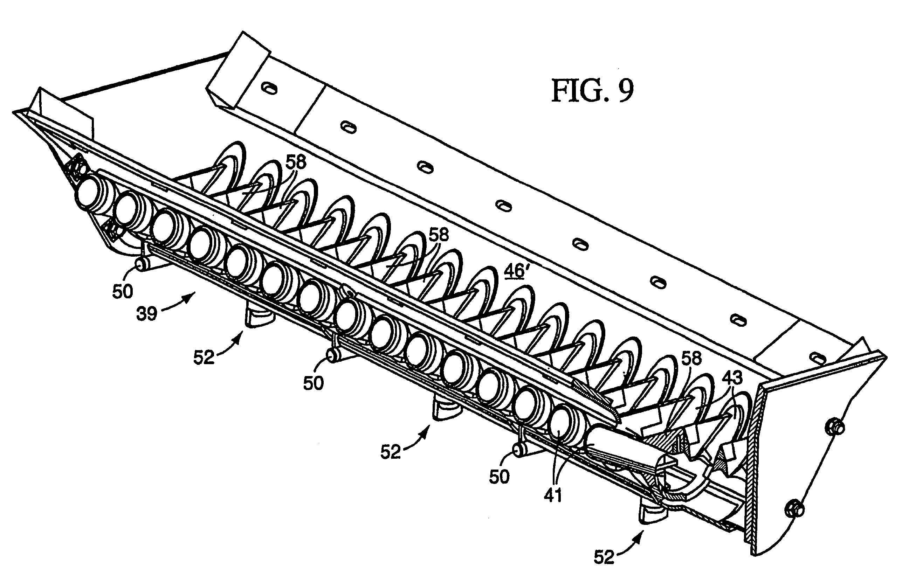

- Fig. 9: eine perspektivische Vorderansicht der Düsenanordnung des Zuführsystems mit einem Teilquerschnitt,
- Fig. 10: eine perspektivische Vorderansicht der Düsenanordnung, welche mit einer Rühreinrichtung versehen ist,
- Fig. 11: eine Querschnittsansicht der mit einer Rühreinrichtung versehenen Düsenanordnung,
- Fig. 12: einen schematischen Schaltplan eines Steuersystems der Erfindung und
- Fig. 13: einen schematischen Schaltplan eines alternativen Steuersystems der Erfindung.

Eine landwirtschaftliche Sämaschine 10 umfasst einen Rahmen 12 an dem eine Vielzahl einzelner Pflanzeinheiten 14 montiert sind. Die Pflanzeinheiten 14 sind mittels eines Parallelogrammgestänges 16 an den Rahmen 12 montiert, so dass die Pflanzeinheiten 14 sich einzeln auf einer begrenzten Bewegungsbahn relativ zum Rahmen 12 auf und ab bewegen können.

Jede der einzelnen Pflanzeinheiten 14 umfasst einen Hilfsbehälter 18 zur Aufnahme von Saatgut, eine Dosiervorrichtung 20 zur Dosierung des von dem Hilfsbehälter 18 bereitgestellten Saatguts und einen Furchenöffner 22 zum Formen einer Pflanzfurche in einen Boden, in die das von der Dosiervorrichtung 20 dosierte Saatgut abgelegt wird. Das Saatgut wird über einen Saatgutschlauch 24 von der Dosiervorrichtung 20 in die Pflanzfurche geleitet. Zum Schließen der Pflanzfurche, mit dem darin abgelegten Saatgut, wird eine Schließeinrichtung 26 eingesetzt. In einem bevorzugten Ausführungsbeispiel ist die Dosiervorrichtung 20 als Vakuumdosiervorrichtung ausgebildet, obwohl auch andere Arten von Dosiervorrichtungen 20 zum Einsatz kommen können, die rein mechanisch oder mit Druckluft betrieben werden. Es sei erwähnt, dass die vorliegende Erfindung auch für das Ausbringen von Nicht-Saatgut-Produkten auf ein Feld einsetzbar ist. Für Saatgut- und Nicht-Saatgut-Produkte kann die Pflanzeinheit 14 als Ausbringeinheit angesehen werden, welche einen Behälter 18 zur Aufnahme von Produkten, eine Dosiervorrichtung 20 zur Dosierung des vom Behälter 18 zugeführten Produkts und eine Ausbringeinrichtung zum Ausbringen des Produkts auf ein Feld aufweist. Beispielsweise kann chemischer Trockendünger oder Pflanzenschutzmittel dem Behälter 18 zugeführt werden, durch die Dosiervorrichtung 20 dosiert und durch die Ausbringeinrichtung auf das Feld ausgebracht werden.

Der Rahmen 12 trägt einen Hauptbehälter 30 und eine Druckluftpumpe 32. Die Druckluftpumpe 32 wird über einen hydraulischen Motor angetrieben, wobei auch andere Arten von Motoren, wie z. B. Elektromotoren, für den Antrieb der Druckluftpumpe eingesetzt werden können. Die Druckluftpumpe 32 fördert Druckluft in einen Verteiler 34 über einen Hauptluftschlauch 36. Der Verteiler 34 ist aus einem geschlossenen, hohlen Trägerteil des Rahmens 12 ausgebildet. Der Verteiler 34 weist entsprechend der Anzahl der am Rahmen 12 montierten Pflanzeinheiten 14 eine Vielzahl von Verteilerauslässen auf. Einzelne Luftversorgungsschläuche 38 erstrecken sich von den Verteilerauslässen und leiten Druckluft vom Verteiler 34 zu der stromaufwärts gelegenen Seite einer Düsenanordnung 39. Die Düsenanordnung 39 ist auf dem Boden des Hauptbehälters 30 angeordnet. Das im Hauptbehälter 30 befindliche Produkt fließt mittels Schwerkraft in die Düsenanordnung 39. Die stromaufwärts gelegene Seite der Düsenanordnung 39 ist entsprechend der Anzahl der Luftversorgungsschläuche 38 mit einer Vielzahl von Lufteinlässen 41 versehen. Die Lufteinlässe 41 sind in Querrichtung entlang der stromaufwärts gelegenen Seite der Düsenanordnung 39 zueinander beabstandet angeordnet. Die stromabwärts gelegene Seite der Düsenanordnung 39 ist entsprechend der Anzahl der Luftversorgungsschläuche 38 mit einer Vielzahl von Produktauslässen 43 versehen. Die Produktauslässe 43 sind ebenfalls in Querrichtung auf der stromabwärts gelegenen Seite der Düsenanordnung 39 zueinander beabstandet angeordnet.

Die Produktauslässe 43 sind gegenüber den Lufteinlässen 41 angeordnet. Jeder Lufteinlass 41 ist zu einem entsprechenden Produktauslass 43 ausgerichtet. Produktversorgungsschläuche 42 erstrecken sich von den Produktauslässen 43 zu den einzelnen (Saatgut-)Behältern 18 und leiten das im Luftstrom aufgenommene Produkt dorthin.

Die Düsenanordnung 39 ist mit einem konkaven Boden 44 versehen und weist nach außen auseinander laufende Seitenwände 46, 46' auf. Über einen Deckel 47 wird Saatgut oder Nicht-Saatgut-Produkt in den Hauptbehälter 30 gefüllt. Teile der Düsenanordnung 39 können geöffnet werden, um eine Reinigungsöffnung 48 bereitzustellen, wie in US 6,609,468 A beschrieben ist.

Der Lufteinlass 41 ist relativ zum konkaven Boden 44 geneigt und der Produktauslass 43 entsprechend relativ zum konkaven Boden 44 ansteigend angeordnet. Eine integrierte Blende 58 erstreckt sich zwischen dem Lufteinlass 41 und dem Produktauslass 43. Die Blende 58 ist spitz zulaufend ausgebildet und über dem Luftstrom, der von dem Lufteinlass 41 zu dem Produktauslass 43 strömt, angeordnet. Der geneigte Lufteinlass 41 verhindert ein Zurückströmen von Produkt in den Luftversorgungsschlauch 38, wohingegen der ansteigende Produkteinlass 43 einen Produktfluss in den Produktversorgungsschlauch 42 sowie eine Verstopfung dessen verhindert.

Benachbarte Lufteinlass 41/Produktauslass 43-Kombinationen sind in Querrichtung derart zueinander beabstandet angeordnet, dass das Saatgut oder Nicht-Saatgut-Produkt auf beiden Seiten der Blende 58 passieren und sich unterhalb der Blende 58 anhäufen kann. Ein Luftstrom, der vom Lufteinlass 41 zum Produktauslass 43 strömt, nimmt Produkt aus der Anhäufung auf und befördert es durch den Produktversorgungsschlauch 42 zu dem Behälter 18. Das Befördern von Produkt aus dem Hauptbehälter 30 zu den Behältern 18 wird automatisch durchgeführt, wenn Produkt in den Behältern 18 benötigt wird. Sobald ein einzelner Behälter 18 mit Produkt befüllt wird, wird ein Produkteinlass 60 des Behälters 18 von Produkt abgedeckt, wodurch dieser blockiert wird und sich der Luftstrom verlangsamt, so dass der Luftstrom am Hauptbehälter 30 kein Produkt mehr aufnehmen und dieses zu den einzelnen Behältern 18 befördern kann. Umgekehrt, wenn das Produkt von der Dosiervorrichtung 20 verbraucht wird, wird der Produkteinlass 60 des Behälters 18 freigelegt, wodurch der Luftstrom wieder Produkt zur Beförderung in den Behälter 18 aufnehmen kann. Auf diese Art werden die Behälter 18 stetig und automatisch mit Produkt versorgt. Die Seitenwände des Behälters 18 sind mit Entlüftungssieben 61 versehen um in den Behältern 18 eine Entlüftung der Druckluft zu erzielen. Die Entlüftungssiebe 61 können auch in den Deckeln der Behälter 18 angeordnet werden, sofern die Entlüftungssiebe 61 oberhalb der entsprechenden Produkteinlässe 60 gelegen sind.

In einigen Fällen weist das Produkt große Partikel auf, wie z. B. großes Saatgut (Mais und Sojabohnen) und es ist schwer für den Luftstrom dieses aufzunehmen. Um sich großem Saatgut anzupassen können die Lufteinlässe 41 mit einem Einschub 62 versehen sein, welche einen Ablenkbereich 64 für den Luftstrom aufweisen, der einen Teil des Luftstroms nach unten hin ablenkt, um das Saatgut in der Anhäufung aufzuwirbeln, so dass das Saatgut besser von dem Luftstrom aufgenommen werden kann, wenn dieser in den Produktauslass 43 strömt. Der Einschub 62 ist mit einem Positioniersteg 66 versehen, welcher in eine am Lufteinlass 41 ausgebildete Aussparung eingreift, um eine korrekte Ausrichtung des Einschubs 62 und des Ablenkbereichs 64 zu gewährleisten.

In anderen Fällen kann das Saatgut oder Nicht-Saatgut-Produkt zu leicht sein und wird schon durch geringe Luftströme sofort weggetragen. Um dies zu verhindern können die Blenden 58 mit einem Element 68 versehen werden. Das Element 68 kann an die Blenden 58 angeklemmt werden. Das Element 68 weist einen versperrenden Boden 70 auf, der die dem Luftstrom ausgesetzte Menge an Produkt begrenzt. Das Element 68 kann aus Kunststoff hergestellt sein. Ein oberer offener Spalt 74 ist vorgesehen, so dass das Element 68 an die Blende 58 angeklemmt werden kann.

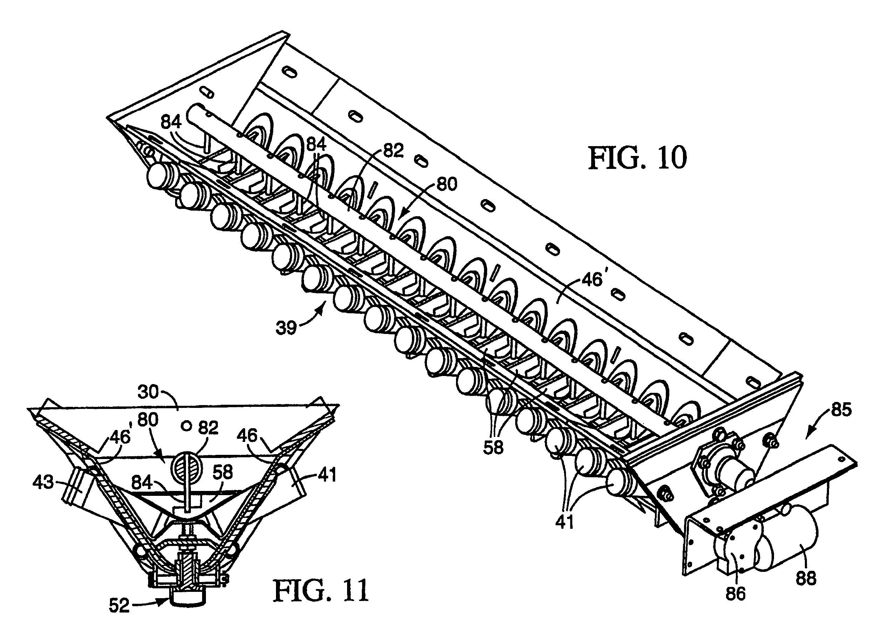

In einem alternativen Ausführungsbeispiel kann der Einschub 62 für großes Saatgut auch durch eine Rühreinrichtung 80 ersetzt werden. Die Rühreinrichtung 80 weist eine Querstange 82 auf, die sich quer zur Düsenanordnung 39 erstreckt. Die Querstange 82 ist mit mehreren sich radial erstreckenden Fingern 84 versehen. Wie in Figur 10 gezeigt ist, sind die Finger 84 in Querrichtung zueinander ausgerichtet.

Die Querstange 82 wird über einen Rühreinrichtungsantrieb 85, welcher ein durch einen Motor 88 angetriebenes Getriebe 86 aufweist, hin- und her gedreht. Alternativ kann der Motor 88 durch eine elektrische Kupplung ersetzt werden, welche bei Bedarf von einem mechanischen Antrieb eine Rotationskraft auf das Getriebe überträgt. Der mechanische Antrieb kann z. B. als Antriebsstrang ausgebildet sein, der Rotationskräfte von einem Rad des Rahmens 12 aufnimmt, auf dem der Hauptbehälter getragen wird.

In der unteren Totpunktstellung der Finger 84 erstrecken diese sich zwischen den einzelnen Düsen, die durch die zueinander ausgerichteten Lufteinlässe 41 und Produktauslässe 43 gebildet werden. Auf diese Art wird der Bereich zwischen den Düsen von den Fingern 84 verrührt. Ausgehend von der unteren Totpunktstellung, wie sie in Figur 11 dargestellt ist, dreht die Getriebe 86/Motor 88 Anordnung die Querstange 82 um 51,5 Grad in jede Richtung. Somit werden die Finger 84 in einem Winkel von 103 Grad verschwenkt.

Schlecht strömendes Saatgut erfordert einen stärkeren Luftstrom, damit das Saatgut in den Produktauslass eingeführt werden kann, und wenn dann die Messkrümmung im Hilfsbehälter 18 freigelegt wird, weil nicht ausreichend Saatgut aus dem Hauptbehälter 30 befördert wurde, dann ist ein hohes Maß an Luftstrom vorhanden. In dieser Situation herrscht ein großer Druckunterschied zwischen der Luft im Verteiler 34 und dem Hauptbehälter 30.

Ein großer Druckabfall (ca. 2" Wassersäule bzw. ca. 5,08 cm Waasersäule) tritt auf, wenn Luft aus dem Verteiler 34 herunter in den Verteilerauslass, in den Luftversorgungsschlauch 38 und in den Lufteinlass 41 der Düsenanordnung 39 strömt. Ebenfalls tritt eine reduzierte Flussbegrenzung für die Versorgungsluft auf, welche es nun einfacher hat, durch die Produktauslässe 43 in die fast leeren Hilfsbehälter zu strömen.

Andererseits kann mit kleinen Saatgutkörnern, welche bei geringem Luftstrom aufgenommen werden, der Hilfsbehälter schnell kontinuierlich befüllt bleiben. Während des Pflanzbetriebs und insbesondere beim Vorgewende neigt die Rühreinrichtung dazu, das kleine Saatgut kontinuierlich in den Luftstrom unter der Düsenanordnung 39 zu drücken, von wo aus sie in den Produktauslass 43 getragen werden. Über der Zeit kann der Versorgungsschlauch überfüllt werden, wenn mehr Saatgut befördert als in den Hilfsbehälter dosiert wird. In dieser Situation liegt ein sehr geringer Luftstrom vor und somit auch nur eine kleine Druckdifferenz zwischen den Stellen der im System angeordneten Komponenten.

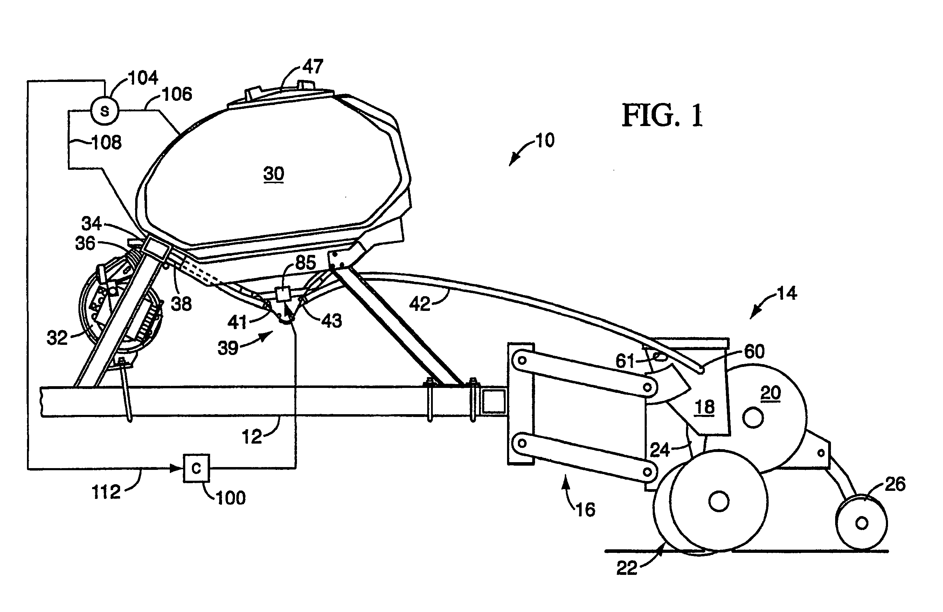

Wie in Figur 1 dargestellt ist der Antrieb 85 der Rühreinrichtung mit einer Steuerung 100 signalverbunden. Die Steuerung 100 wird betrieben, um den Antrieb 85 der Rühreinrichtung an- oder auszuschalten, insbesondere durch Aktivierung oder Deaktivierung des Motors 88 (Figur 10), oder, alternativer Weise, durch Aktivierung oder Deaktivierung einer elektrischen Kupplung (nicht gezeigt), welche Rotationsenergie an die Rühreinrichtung überträgt.

Ein Differenzdruckschalter 104 ist auf dem Rahmen 12 installiert. Der Schalter 104 ist über ein Rohr 106 mit dem Hauptbehälter 30 und über ein Rohr 108 mit dem Verteiler 34 pneumatisch verbunden. Der Schalter 104 reagiert auf den Differenzdruck zwischen dem Hauptbehälter 30 und dem Verteiler 34, wechselt seine Schalterstellung (von offen nach geschlossen bzw. umgekehrt) bei einem voreingestellten Differenzdruck und zeigt der Steuerung 100 über ein mit der Steuerung 100 signalverbundene Signalleitung 112 elektronisch seine Schalterstellung an.

Bei einem hohen Differenzdruck weist der Schalter 104 eine entsprechende Schalterstellung auf, in der ein Signal über die Signalleitung 112 zur Steuerung 100 gesendet wird. Die Steuerung 100 schaltet dann die Rühreinrichtung 85 ein. Bei einem niedrigen Differenzdruck weist der Schalter 104 eine entsprechende Schalterstellung auf, in der ein entsprechendes Signal über die Signalleitung 112 zur Steuerung 100 gesendet wird, um die Rühreinrichtung 85 auszuschalten.

Obwohl die Druckerfassungen für den Differenzdruckschalter 104, wie oben beschrieben, im Verteiler 34 und im Hauptbehälter erfolgen, können die Druckerfassungen auch an anderen Stellen, welche in einem Abstand zueinander liegen oder einen Druckabfall aufweisen, entlang des Luftstroms zwischen dem Gebläse 32 und den Ausbringeinheiten 14 erfolgen, so dass eine Luftstromzunahme oder Luftstromabnahme erfassbar ist.

Die Steuerung 100 kann einen Teil einer allgemeinen Steuereinheit der Maschine darstellen.

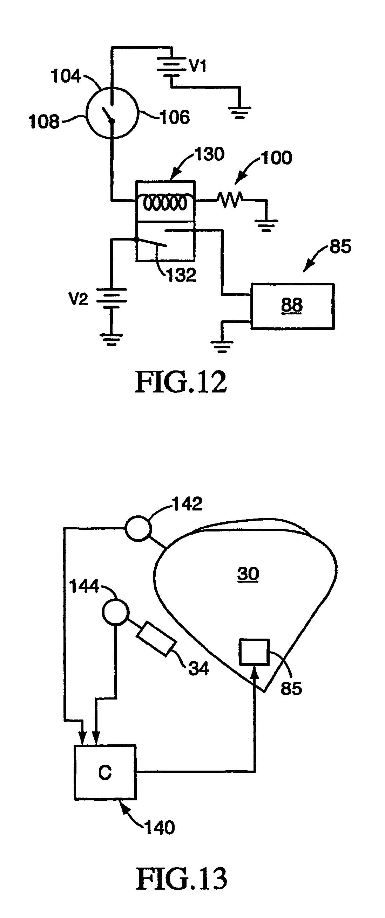

Wie in Figur 12 dargestellt ist, kann die Steuerung 100 einen Relaisschalter 130 aufweisen, an dem über den Differenzdruckschalter 104 eine Steuerspannung V1 angelegt ist. Eine Motorantriebsspannung V2 ist an einem Schalterelement 132 des Relaisschalters 130 angelegt und stellt die Führungsgröße für den Motor 88 der Rühreinrichtung, bzw. für die elektronische Kupplung, dar. Wenn der Differenzdruckschalter 104 seinen Zustand ändert, bewirkt die Spannung V1 eine Änderung des Schaltzustands des Relaisschalters 130, um entweder den Motor 88, bzw. die Kupplung, mit der Spannung V2 zu versorgen, oder um den Motor 88, bzw. die Kupplung, spannungsfrei zu schalten.

Figur 13 zeigt eine alternative Ausführungsform, in der eine Steuerung 140 von Drucksensoren 142, 144 aus dem Hauptbehälter 30 und dem Verteiler 34 Drucksignale empfängt, um dann, möglicherweise weitere Betriebsgrößen von anderen Sensoren empfangend, den Antrieb 85 der Rühreinrichtung 80 zu starten oder zu stoppen. Bei diesem Beispiel stellt der Differenzdrucksensor einen Teil der Steuerung dar, in der die Signale der Drucksensoren 142, 144 miteinander verglichen werden.

Die Steuerung 140 kann als Teil einer allgemeinen Steuereinheit für die Maschine ausgebildet sein.

## Patentansprüche

1. Zuführsystem für landwirtschaftliches Produkt, insbesondere für Saatgut, mit einem Rahmen (12), einem am Rahmen (12) montierten Hauptbehälter (30), wobei der Hauptbehälter (30) eine Luftzuführeinrichtung (39) aufweist, in die das Produkt aus dem Hauptbehälter (30) geleitet wird und wobei die Luftzuführeinrichtung (39) wenigstens einen Lufteinlass (41) und wenigstens einen Produktauslass (43) aufweist, wenigstens einer Ausbringeinheit (14), wobei die Ausbringeinheit (14) eine mit dem Produktauslass (43) strömungsverbundene Dosiervorrichtung (20) zum Ausbringen von Produkt auf ein Feld aufweist, einem mit der Luftzuführeinrichtung (39) pneumatisch verbundenen Gebläse (32), welches in die Luftzuführeinrichtung (39) geleitete Druckluft erzeugt, wobei in der Luftzuführeinrichtung (39) befindliches Produkt durch den Luftstrom aufgenommen wird, wenn der Luftstrom durch die Luftzuführeinrichtung (39) in den Produktauslass (43) strömt, und einer im Hauptbehälter (30) angeordnete Rühreinrichtung (80), welche aktivierbar ist, um Produkt in den Luftstrom zu befördern, **dadurch gekennzeichnet, dass** ein Sensor (104) und eine Steuerung (100) vorgesehen sind, wobei der Sensor (104) auf die Größe der im Produktauslass (43) strömenden Produktflussrate anspricht und wobei die Steuerung (100) mit dem Sensor (104) und mit der Rühreinrichtung (80) signalverbunden ist und die Rühreinrichtung (80) aktiviert, wenn die Größe der Produktflussrate einen voreinstellbaren Wert unterschreitet.

2. Zuführsystem nach Anspruch 1, **dadurch gekennzeichnet, dass** die Rühreinrichtung (80) durch einen Antrieb (85) antreibbar ist, um im Hauptbehälter (30) befindliches Produkt mechanisch zu befördern, dass der Sensor (104) druckbeaufschlagt ist, um zwischen dem Hauptbehälter (30) und der stromaufwärts gelegenen Seite der Luftzuführeinrichtung (39), stromabwärts des Gebläses (32), einen Differenzdruck zu erfassen, dass der Sensor (104) einen elektrischen Schalter umfasst, der auf den von dem Sensor (104) erfassten Differenzdruck anspricht, und dass die Steuerung (100) auf eine Schalterstellung des Schalters anspricht, um den Antrieb für die Rühreinrichtung (80) zu starten oder zu stoppen.

3. Zuführsystem nach Anspruch 1, **dadurch gekennzeichnet, dass** die Rühreinrichtung (80) durch einen Antrieb (85) antreibbar ist, um im Hauptbehälter (30) befindliches Produkt mechanisch zu befördern, dass der Sensor (104) als druckbeaufschlagbarer Differenzdruckschalter ausgebildet ist, um zwischen dem Hauptbehälter (30) und der stromaufwärts gelegenen Seite der Luftzuführeinrichtung (39), stromabwärts des Gebläses (32), einen Differenzdruck zu erfassen, und dass die Steuerung (100) ein Relais (130) umfasst, welches auf die Schalterstellung des Differenzdruckschalters anspricht, um den Antrieb für die Rühreinrichtung (80) zu starten oder zu stoppen.

4. Zuführsystem nach einem der Ansprüche 1 bis 3, **dadurch gekennzeichnet, dass** das Luftzuführsystem (39) als Düsenanordnung ausgebildet ist.

5. Zuführsystem nach einem der vorhergehenden Ansprüche, **dadurch gekennzeichnet, dass** die Dosiervorrichtung (20) über einen Produktversorgungsschlauch (42) mit dem Produktauslass (43) verbunden ist.

6. Zuführsystem nach einem der vorhergehenden Ansprüche, **dadurch gekennzeichnet, dass** die Luftzuführeinrichtung (39) über einen Luftversorgungsschlauch (38) mit dem Gebläse (32) verbunden ist.

7. Zuführsystem nach einem der vorhergehenden Ansprüche, **dadurch gekennzeichnet, dass** ein Furchenöffner (22) vorgesehen ist.

8. Zuführsystem nach einem der vorhergehenden Ansprüche, **dadurch gekennzeichnet, dass** die Ausbringeinheit (14) als Pflanzeinheit ausgebildet ist.

9. Zuführsystem nach einem der vorhergehenden Ansprüche, **dadurch gekennzeichnet, dass** eine Vielzahl von Ausbringeinheiten (14) vorgesehen ist, wobei wenigstens ein Lufteinlass (41) eine Vielzahl von Lufteinlässen (41) umfasst und wenigstens ein Produktauslass (43) eine Vielzahl von Produktauslässen (43) umfasst, dass eine Vielzahl von Blenden (58) vorgesehen ist, wobei sich die Blenden (58) zwischen und oberhalb der Vielzahl von Lufteinlässen (41) bzw. Produktauslässen (43) erstrecken und wobei Zwischenräume zwischen den Blenden (58) ausgebildet sind, und dass die Rühreinrichtung (80) mit einer Vielzahl von Fingern (84) ausgestattet ist, welche sich in die zwischen den Blenden (58) ausgebildeten Zwischenräume erstrecken.

10. Zuführsystem nach Anspruch 9, **dadurch gekennzeichnet, dass** die Rühreinrichtung (80) eine Querstange (82) aufweist, welche oberhalb der Blenden (58) angeordnet ist, wobei die Querstange (82) eine Vielzahl von Fingern (84) aufweist, welche sich radial nach außen von der Querstange (82) erstrecken.

11. Zuführsystem nach Anspruch 10, **dadurch gekennzeichnet, dass** die Finger (84) an der Querstange (82) in Querrichtung zueinander ausgerichtet sind.

12. Zuführsystem nach einem der Ansprüche 10 oder 11, **dadurch gekennzeichnet, dass** die Querstange (82) vorwärts und rückwärts drehbar ist, so dass die Finger (84) das in der Luftzuführeinrichtung (39) befindliche Produkt verrühren.

13. Zuführsystem nach einem der Ansprüche 10 bis 12, **dadurch gekennzeichnet, dass** die Querstange (82) vorwärts und rückwärts entlang eines Kreisbogens drehbar ist, wobei die Mitte des Kreisbogens auf der unteren Totpunktstellung bezüglich der Luftzuführeinrichtung (39) liegen kann.

14. Zuführsystem nach einem der vorhergehenden Ansprüche, **dadurch gekennzeichnet, dass** die Luftzuführeinrichtung (39) eine stromaufwärts gerichtete Seitenwand (46), eine stromabwärts gerichtete Seitenwand (46') und einen Boden (48) aufweist, wobei der wenigstens eine Lufteinlass (41) eine Vielzahl von Lufteinlässen (41) aufweist, die mit der stromaufwärts gerichteten Seitenwand (46) und mit dem Gebläse (32) verbunden sind und wobei der Produktauslass (43) eine Vielzahl von Produktauslässen (43) aufweist, von denen jeder zu einem Lufteinlass (41) ausgerichtet und mit der stromabwärts gerichteten Seitenwand (46') verbunden ist, und dass eine Vielzahl von Blenden (58) vorgesehen ist, von denen jede zwischen einem Lufteinlass (41) und einem Produktauslass (43), beabstandet zu dem Boden (48), angeordnet ist, wobei die Rühreinrichtung (80) voneinander beabstandete Teile aufweist, die zwischen den Blenden (58) bewegbar sind.

15. Zuführsystem nach einem der vorhergehenden Ansprüche, **dadurch gekennzeichnet, dass** die wenigstens eine Ausbringeinheit (14) einen Hilfsbehälter (18) aufweist, welcher zwischen einem Produktauslass (43) und einer entsprechenden Dosiervorrichtung (20) angeordnet und mit diesen strömungsverbunden ist.

16. Zuführsystem nach einem der vorhergehenden Ansprüche, **dadurch gekennzeichnet, dass** das Produkt in den Hauptbehältern (30) mittels Schwerkraft in die Luftzuführeinrichtungen (39) geleitet wird.

## Claims

1. A feed system for an agricultural product, especially for seeds, with a frame (12), a main container (30) mounted on the frame (12), wherein the main container (30) comprises an air feed device (39), in which the product is guided out of the main container (30) and wherein the air feed device (39) has at least one air inlet (41) and at least one product outlet (43), at least one applicator unit (14), wherein the applicator unit (14) comprises a metering device (20) in flow connection with the product outlet (43) for placing product on a field, a blower (32) pneumatically connected to the air feed device (39) and creating compressed air passed to the air feed device (39), wherein product present in the air feed device (39) is taken up by the airstream when the airstream flows through the air feed device (39) into the product outlet (43), and an agitator device (80) arranged in the main container (30), which can be activated in order to feed product into the airstream, **characterized in that** a sensor (104) and a controller (100) are provided, wherein the sensor (104) responds to the magnitude of the product flow rate flowing in the product outlet (43) and wherein the controller (100) is connected for signal transfer to the sensor (104) and to the agitator device (80) and activates the agitator device (80) when the magnitude of the product flow rate falls below a pre-adjustable value.

2. A feed system according to claim 1, **characterized in that** the agitator device (80) can be driven by a drive means (85) in order to feed mechanically product present in the main container (30), **in that** the sensor (104) is subject to pressure in order to detect a differential pressure between the main container (30) and the downstream side of the air feed device (39), downstream of the blower (32), **in that** the sensor (104) comprises an electric switch which responds to the differential pressure detected by the sensor (104), and **in that** the controller (100) responds to a switch position of the switch in order to start or stop the drive to the agitator device (80).

3. A feed system according to claim 1, **characterized in that** the agitator device (80) can be driven by a drive means (85) in order to feed mechanically product present in the main container (30), **in that** the sensor (104) is formed as a pressure responsive differential pressure switch, in order to detect a differential pressure between the main container (30) and the downstream side of the air feed device (39), downstream of the blower (32), and **in that** the controller (100) comprises a relay (130) which responds to the switch position of the differential pressure switch, in order to start or stop the drive for the agitator device (80).

4. A feed system according to any of claims 1 to 3, **characterized in that** the air feed device (39) is formed as a nozzle arrangement.

5. A feed system according to any of the preceding claims, **characterized in that** the metering device (20) is connected through a product supply hose (42) to the product outlet (43).

6. A feed system according to any of the preceding claims, **characterized in that** the air feed device (39) is connected to the blower (32) through an air supply hose (38).

7. A feed system according to any of the preceding claims, **characterized in that** in that a furrow opener (22) is provided.

8. A feed system according to any of the preceding claims, **characterized in that** the applicator unit (14) is formed as a planter unit.

9. A feed system according to any of the preceding claims, **characterized in that** a plurality of applicator units (14) is provided, wherein at least one air inlet (41) comprises a plurality of air inlets (41) and at least one product outlet (43) comprises a plurality of product outlets (43), **in that** a plurality of screens (58) is provided , wherein the screens (58) extend between and above the plurality of air inlets (41) and product outlets (43) respectively and wherein spaces are formed between the screens (58), and **in that** the agitator device (80) is equipped with a plurality of fingers (84) which extend into the spaces formed between the screens (58).

10. A feed system according to claim 9, **characterized in that** the agitator device (80) comprises a transverse rod (82) which is arranged above the screens (58), wherein the transverse rod (82) has a plurality of fingers (84) which extend radially out from the transverse rod (82).

11. A feed system according to claim 10, **characterized in that** the fingers (84) on the transverse rod (82) are aligned with one another in the transverse direction.

12. A feed system according to claim 10 or 11, **characterized in that** the transverse rod (82) can turn forwards and backwards, so that the fingers (84) agitate the product present in the air feed device (39).

13. A feed system according to any of claims 10 to 12, **characterized in that** the transverse rod (82) can turn forwards and backwards along an arc, wherein the centre of the arc can lie at the lower dead point relative to the air feed device (39).

14. A feed system according to any of the preceding claims, **characterized in that** the air feed device (39) comprises an upstream sidewall (46), a downstream sidewall (46') and a bottom (48), wherein the at least one air inlet (41) comprises a plurality of air inlets (41) which are connected to the upstream sidewall (46) and to the blower (32) and wherein the product outlet (43) comprises a plurality of product outlets (43), of which each is aligned with an air inlet (41) and is connected to the downstream sidewall (46'), and **in that** a plurality of screens (58) is provided, each of which is arranged between an air inlet (41) and a product outlet (43), spaced from the bottom (48), wherein the agitator device (80) has parts spaced from one another which are movable between the screens (58).

15. A feed system according to any of the preceding claims, **characterized in that** the at least one applicator unit (14) has an auxiliary container (18) which is arranged between a product outlet (43) and a corresponding metering device (20) and is flow connected to the latter.

16. A feed system according to any of the preceding claims, **characterized in that** product in the main container (30) is passed into the air feed device (39) by means of gravity.

## Revendications

1. Système de distribution pour un produit agricole, en particulier pour de la semence, avec un cadre (12), un réservoir principal (30) monté sur le cadre (12), le réservoir principal (30) présentant un dispositif d'arrivée d'air (39), dans lequel le produit est dirigé à la sortie du réservoir principal (30) et le dispositif d'arrivée d'air (39) présentant au moins une entrée d'air (41) et au moins une sortie de produit (43), au moins une unité d'épandage (14), l'unité d'épandage (14) présentant un dispositif de dosage (20) relié au niveau de l'écoulement à la sortie du produit (43) pour l'épandage du produit sur un champ, une soufflerie (32) reliée de façon automatique au dispositif d'arrivée d'air (39), laquelle génère de l'air comprimé dirigé dans le dispositif d'arrivée d'air (39), du produit se trouvant dans le dispositif d'arrivée d'air (39) étant entraîné par le flux d'air lorsque le flux d'air s'écoule par le dispositif d'arrivée d'air (39) dans la sortie de produit (43), et un dispositif mélangeur (80) disposé dans le réservoir principal (30), qui peut être activé pour amener du produit dans le flux d'air, **caractérisé en ce qu'**un capteur (104) et une commande (100) sont prévus, le capteur (104) réagissant à la valeur du débit de produit s'écoulant par la sortie de produit (43) et la commande (100) étant reliée par signaux au capteur (104) et au dispositif mélangeur (80) et activant le dispositif mélangeur (80) lorsque la valeur du débit de produit passe au-dessous d'une valeur préréglable.

2. Système de distribution selon la revendication 1, **caractérisé en ce que** le dispositif mélangeur (80) peut être entraîné par un entraînement (85) afin de transporter mécaniquement du produit se trouvant dans le réservoir principal (30), **en ce que** le capteur (104) est alimenté en pression afin d'enregistrer une pression différentielle entre le réservoir principal (30) et le côté situé en amont du dispositif d'arrivée d'air (39), en aval de la soufflerie (32), **en ce que** le capteur (104) comprend un commutateur électrique qui réagit à la pression différentielle enregistrée par le capteur (104) et **en ce que** la commande (100) réagit à une position de l'interrupteur afin de démarrer ou d'arrêter l'entraînement pour le dispositif mélangeur (80).

3. Système de distribution selon la revendication 1, **caractérisé en ce que** le dispositif mélangeur (80) peut être entraîné par un entraînement (85), afin de transporter mécaniquement du produit se trouvant dans le réservoir principal (30), le capteur (104) étant conçu comme un interrupteur à pression différentielle pouvant être alimenté en pression, afin d'enregistrer une pression différentielle entre le réservoir principal (30) et le côté situé en aval du dispositif d'arrivée d'air (39), en aval de la soufflerie (32), et **en ce que** la commande (100) comprend un relais (130) qui réagit à la position de l'interrupteur à pression différentielle, afin de démarrer ou d'arrêter l'entraînement pour le dispositif mélangeur (80).

4. Système de distribution selon l'une quelconque des revendications 1 à 3, **caractérisé en ce que** le système d'arrivée d'air (39) est conçu comme un agencement de buses.

5. Système de distribution selon l'une quelconque des revendications précédentes, **caractérisé en ce que** le dispositif de dosage (20) est relié par un flexible d'alimentation en produit (42) à la sortie du produit (43).

6. Système de distribution selon l'une quelconque des revendications précédentes, **caractérisé en ce que** le dispositif d'arrivée d'air (39) est relié par un flexible d'alimentation en air (38) à la soufflerie (32).

7. Système de distribution selon l'une quelconque des revendications précédentes, **caractérisé en ce qu'**un soc traceur de sillon (22) est prévu.

8. Système de distribution selon l'une quelconque des revendications précédentes, **caractérisé en ce que** l'unité d'épandage (14) est conçue comme une unité de plantation.

9. Système de distribution selon l'une quelconque des revendications précédentes, **caractérisé en ce qu'**une pluralité d'unités d'épandage (14) est prévue, au moins une entrée d'air (41) comprenant une pluralité d'entrées d'air (41) et au moins une sortie d'air (43) comprenant une pluralité de sorties d'air (43), **en ce qu'**une pluralité d'obturateurs (58) est prévue, les obturateurs (58) s'étendant entre et au-dessus de la pluralité d'entrées d'air (41) et de sortie de produit (43) et des interstices étant réalisés entre les obturateurs (58) et **en ce que** le dispositif mélangeur (80) est équipé d'une pluralité de doigts (84) qui s'étendent dans les interstices réalisés entre les obturateurs (58).

10. Système de distribution selon la revendication 9, **caractérisé en ce que** le dispositif mélangeur (80) présente une barre transversale (82) qui est disposé au-dessus des obturateurs (58), la barre transversale (82) présentant une pluralité de doigts (84) qui s'étendent radialement vers l'extérieur de la barre transversale (82).

11. Système de distribution selon la revendication 10, **caractérisé en ce que** les doigts (84) sur la barre transversale (82) sont orientés dans le sens transversal les uns par rapport aux autres.

12. Système de distribution selon l'une quelconque des revendications 10 ou 11, **caractérisé en ce que** la barre transversale (82) peut tourner en avant et en arrière, de sorte que les doigts (84) remuent le produit se trouvant dans le dispositif d'arrivée d'air (39).

13. Système de distribution selon l'une quelconque des revendications 10 à 12, **caractérisé en ce que** la barre transversale (82) peut tourner en avant et en arrière le long d'un arc de cercle, le centre de l'arc de cercle pouvant se situer sur la position du point mort bas par rapport au dispositif d'arrivée d'air (39).

14. Système de distribution selon l'une quelconque des revendications précédentes, **caractérisé en ce que** le dispositif d'arrivée d'air (39) présente une paroi latérale (46) orientée en amont, une paroi latérale (46') orientée en aval et un fond (48), l'entrée d'air (41) présentant une pluralité d'entrées d'air (41) qui sont reliés à la paroi latérale (46) dirigée en amont et à la soufflerie (32), et la sortie de produit (43) présentant une pluralité de sorties de produit (43), dont chacune est dirigée vers une entrée d'air (41) et est reliée à la paroi latérale (46') dirigée en aval, et **en ce qu'**une pluralité d'obturateurs (58) est prévue, dont chacun est disposé entre une entrée d'air (41) et une sortie de produit (43), à distance du fond (48), le dispositif mélangeur (80) présentant des parties espacées les unes des autres, qui peuvent être déplacées entre les obturateurs (58).

15. Système de distribution selon l'une quelconque des revendications précédentes, **caractérisé en ce que** l'une unité d'épandage (14) comporte un réservoir auxiliaire (18) qui est disposé entre une sortie de produit (43) et un dispositif de dosage (20) correspondant et est relié au niveau de l'écoulement du flux à ces éléments.

16. Système de distribution selon l'une quelconque des revendications, **caractérisé en ce que** le produit dans les réservoirs principaux (30) est dirigé sous l'effet de la gravité dans les dispositifs d'arrivée d'air (39).
